## Europäisches Patentamt
## European Patent Office
## Office européen des brevets

(11) Veröffentlichungsnummer: **0 222 193**
**B1**

(12) **EUROPÄISCHE PATENTSCHRIFT**

(45) Veröffentlichungstag der Patentschrift:
22.03.89

(51) Int. Cl.⁴: **B 62 D 25/18**

(21) Anmeldenummer: **86114257.8**

(22) Anmeldetag: **15.10.86**

(54) Radhausauskleidung für Kraftfahrzeuge.

(30) Priorität: 05.11.85 DE 3539146

(43) Veröffentlichungstag der Anmeldung:
20.05.87 Patentblatt 87/21

(45) Bekanntmachung des Hinweises auf die Patenterteilung:
22.03.89 Patentblatt 89/12

(84) Benannte Vertragsstaaten:
DE FR GB IT SE

(56) Entgegenhaltungen:
EP-A- 0 041 353
EP-A- 0 088 324
DE-A- 2 657 494
US-A- 4 227 718

(73) Patentinhaber: FORD-WERKE AKTIENGESELLSCHAFT,
Werk Köln-Niehl Henry-Ford-Strasse Postfach 60 40 02,
D-5000 Köln 60 (DE)
(84) Benannte Vertragsstaaten: DE IT SE

(73) Patentinhaber: FORD MOTOR COMPANY LIMITED,
Eagle Way, Brentwood Essex CM13 3BW (GB)
(84) Benannte Vertragsstaaten: GB

(73) Patentinhaber: FORD FRANCE SOCIETE ANONYME,
344 Avenue Napoléon Bonaparte B.P. 307, F-92506 Rueil
Malmaison Cedex (FR)
(84) Benannte Vertragsstaaten: FR

(72) Erfinder: Fuchs, Lothar, Albrecht-Dürer-Strasse 74,
D-5024 Pulheim (DE)

(74) Vertreter: Ritzkowsky, Harald, Dipl.-Ing., Ford-Werke
Aktiengesellschaft Patentabteilung NH/DRP
Henry-Ford-Strasse, D-5000 Köln 60 (DE)

ACTORUM AG

## Beschreibung

Die Erfindung betrifft eine Radhausauskleidung für Kraftfahrzeuge der im Oberbegriff des Patentanspruchs 1 erläuterten Art.

Aus der DE-A-29 08 837 ist eine Radhausauskleidung für Kraftfahrzeuge bekannt, die aus einem etwa der Kontur des Radhauses angepassten und an diesem befestigten Schale aus Kunststoffmaterial besteht.

Diese bekannte Radhausauskleidung soll den dahinterliegenden Kotflügel bzw. das dahinterliegende Radhaus aus Blech vor dem korrodierenden Sandstrahleffekt des Schmutzwassers schützen. Dementsprechend besteht die Schale aus Kunststoffmaterial aus einem verhältnismässig festem Kunststoffmaterial, wie z. B. aus einem mit Mineralstoffen gefüllten Polypropylen.

Aus der DE-C-30 07 760 ist eine Radhausauskleidung für Kraftfahrzeuge bekannt, die gleichfalls aus einer etwa der Kontur des Radhauses angepassten und an dieser befestigten Schale aus Kunststoffmaterial besteht, wobei diese aus verstärktem Polyurethanharz bestehen soll, das wieder verhältnismässig fest und glattflächig ist.

Aus der EP-A-0 091 419 bzw. der US-A-3 899 192 ist eine Radhausauskleidung für Lastkraftfahrzeuge bekannt, die aus benachbart den Rädern des Lastkraftwagens an ebenen Radhausflächen angebrachten mit grasartigen Vorsprüngen versehenen Kunststoffmatten besteht. Dadurch soll in erster Linie der bei Lastkraftwagen bei schneller Fahrt entstehende sehr umfangreiche Sprühnebel vermindert werden, der die Sicht nachfolgender Kraftfahrzeuge beträchtlich stört.

Die beiden erstgenannten Radhausauskleidungen und auch die drittgenannte Radhausauskleidung sind nicht geeignet zur Geräuschdämpfung der Fahr- und Spritzgeräusche im Radhaus eines Kraftfahrzeuges in besonderer Weise beizutragen.

Darüberhinaus sind die mit grasartigen Vorsprüngen versehenen Kunststoffmatten sehr aufwendig in ihrer Herstellung und nur schwer so komplex zu verformen, dass sie den engen Radhäusern eines Personenkraftfahrzeuges angepasst werden könnten.

Die Aufgabe der Erfindung ist es, eine Radhausauskleidung für Kraftfahrzeuge der im Oberbegriff des Patentanspruchs 1 erläuterten Art derart zu verbessern, dass bei einfachem Materialeinsatz sowohl die Geräuschdämpfung der Radhausauskleidung als auch die Unterdrückung des von den Rädern erzeugten Sprühnebels verbessert werden.

Gemäss der Erfindung wird diese Aufgabe gelöst, indem eine Radhausauskleidung für Kraftfahrzeuge der im Oberbegriff des Patentanspruchs 1 erläuterten Art die im Kennzeichenteil des Patentanspruchs 1 aufgezeigten Merkmale aufweist.

In den Ansprüchen 2 bis 4 sind weitere zweckmässige Ausführungsformen der Erfindung erläutert.

Dadurch, dass das die Schale bildende Kunststoffmaterial ein genadeltes Kunststoffaser-Vliesmaterial ist, das aus Bahnenmaterial durch Warmverformung der Kontur des Radhauses angepasst und durch Kleben, Klemmen, Schrauben oder dergleichen im Radhaus befestigt ist, wird bei einfachem Materialeinsatz sowohl eine beträchtliche Verbesserung der Geräuschdämpfung der Roll- und Spritzwassergeräusche im Radhaus erzielt und darüberhinaus durch die poröse Oberfläche des Auskleidungsmaterials der von den Rädern erzeugte Sprühnebel aufgefangen und vermindert.

Die Rückseite des Kunststoffaser-Vliesmaterials kann hierbei durch eine entsprechende Beschichtung wasserundurchlässig und klebfähig gemacht und vollflächig am Radhaus befestigt sein.

Zur bevorzugten Schalldämpfung kann das Kunststoffaser-Vliesmaterial vollflächig durch Kleben am Radhaus befestigt sein und an seiner Vorderseite mit einer Beschichtung aus elastischem Kunststoff wasserundurchlässig gemacht sein.

Zur besonderen Schalldämpfung und Sprühnebelunterdrückung kann das Kunststoffaser-Vliesmaterial zu beiden Seiten eines warmverformbaren Trägermaterials aufgebracht sein, das die Radhausauskleidung derart versteift, dass sie durch Klemmen oder Schrauben auch im Abstand zum Radhaus festlegbar ist.

Die Erfindung wird anhand von in der Zeichnung gezeigten Ausführungsbeispielen näher erläutert.

Es zeigt:

Fig. 1 eine Schrägrissdarstellung einer Radhausauskleidung für Kraftfahrzeuge gemäss der Erfindung;

Fig. 2 einen Schnitt durch eine Radhausauskleidung mit vergrössert gezeigter Ausführungsform des Materials der Radhausauskleidung;

Fig. 3 einen Schnitt durch eine Radhausauskleidung mit einer vergrössert gezeigten, weiteren Ausführungsform des Materials der Radhausauskleidung und

Fig. 4 einen Schnitt durch eine Radhausauskleidung mit einer vergrössert gezeigten, weiteren Ausführungsform des Materials der Radhausauskleidung.

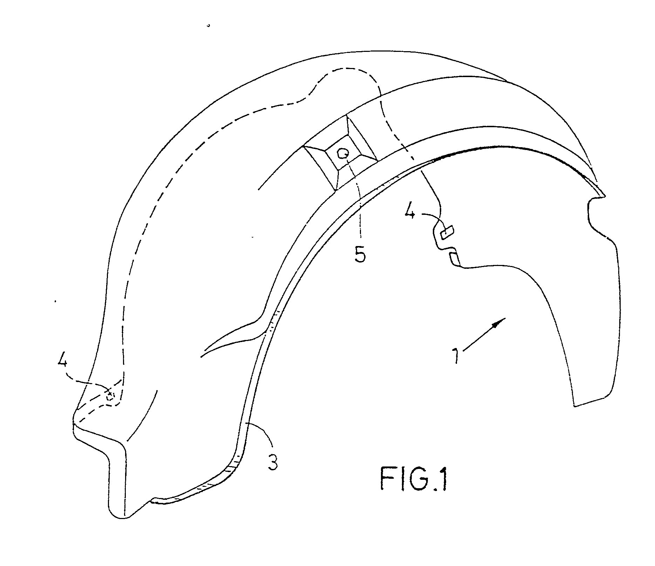

In Fig. 1 ist eine Radhausauskleidung 1 für ein hinteres Radhaus 2 einer Kraftfahrzeugkarosserie in Schrägrissdarstellung gezeigt. Die Radhausauskleidung 1 ist etwa der Kontur des Radhauses 2 aus Blech angepasst und bildet eine Schale aus Kunststoffmaterial, die über Befestigungseinrichtungen, wie Klemmränder 3 und Clipse 4 oder Verschraubungen 5 am Radhaus 2 aus Blech befestigt werden kann.

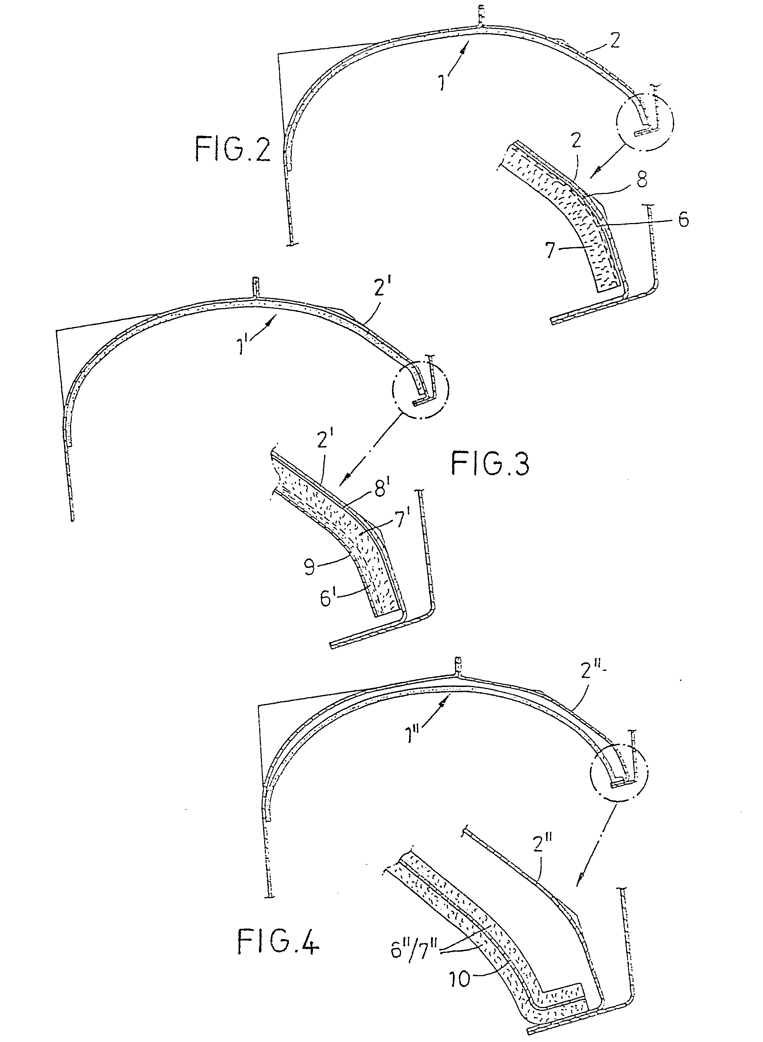

Das besondere der erfindungsgemässen Radhausauskleidung für Kraftfahrzeuge besteht hierbei in dem verwendeten Kunststoffaser-Vliesmaterial, dessen Anordnung im Zusammenhang mit Schnitten in den Figuren 2 bis 4 erläutert wird.

Aus Fig. 2 ist hierbei eine einfachste Ausführungsform der Radhausauskleidung 1 zu entnehmen, bei der eine auf ein Vliesmaterial 6 genadelte Kunststoffaser 7 ein Bahnenmaterial bildet, das durch Warmverformung der Kontur des Radhauses angepasst wird und durch eine Kleberbeschichtung 8 vollflächig mit dem Radhaus aus Blech verbunden wird.

Die offenporige Oberfläche des genadelten Kunststoffaser-Vliesmaterials sorgt hierbei einerseits für eine gute Geräuschdämpfung und andererseits auch für eine gute Unterdrückung des Sprühnebels. Obwohl sich die offenporige Oberfläche des Kunststoffaser-Vliesmaterials 7/6 durch Schlamm zusetzen kann, hat es sich gezeigt, dass der Schlamm bei Fahrten über normale regennasse Strassen wieder weitgehend ausgeschwemmt wird. Dafür ist die strahlartige Wirkung des Spritzwassers verantwortlich.

Aus Fig. 3 ist eine weitere Ausführungsform der Radhausauskleidung 1' der Erfindung zu ersehen, wobei zur bevorzugten Schalldämpfung das Kunststoffaser-Vliesmaterial 7'/6' an seiner Rückseite mit einer Kleberbeschichtung 8' zur Befestigung am Radhaus 2 versehen ist, wobei die Vorderseite des Kunststoffaser-Vliesmaterials 7'/6' durch eine Beschichtung 9 aus elastischem Kunststoff wasserundurchlässig gemacht ist. Eine solche Ausführungsform ist bevorzugt für Kraftfahrzeuge geeignet, die abseits von normalen Strassen eingesetzt werden und bei denen die offenporige Oberfläche des Kunststoffaser-Vliesmaterials 7'/6' ständig durch Schmutz zugesetzt würde.

Aus Fig. 4 ist eine weitere Ausführungsform einer Radhausauskleidung 1'' der Erfindung zu ersehen, bei der ein Kunststoffaser-Vliesmaterial 7''/6'' zu beiden Seiten eines warmverformbaren Trägermaterials 10 angeordnet ist, wobei das Trägermaterial 10 die Radhausauskleidung 1'' derart versteift, dass sie durch Klemmen, Schrauben und dergleichen im Radhaus 2'' auch im Abstand zum Radhaus 2'' aus Blech festlegbar ist. Eine solche Ausführungsform bietet sich insbesondere für die vorderen Radhäuser in Kraftfahrzeugen an, wo in zunehmendem Masse nicht mehr der Kotflügel aus Blech sondern ein im Motorraum freistehendes Radhaus die Abdeckung der Vorderräder übernimmt.

## Patentansprüche

1. Radhausauskleidung für Kraftfahrzeuge, aus einer etwa der Kontur des Radhauses (2) angepassten und an dieser befestigten Schale (1) aus Kunststoffmaterial, dadurch gekennzeichnet, dass das die Schale (1) bildende Kunststoffmaterial ein genadeltes Kunststoffaser-Vliesmaterial (7/6) ist, das aus Bahnenmaterial durch Warmverformung der Kontur des Radhauses (2) angepasst und durch Kleben (8), Klemmen, Schrauben oder dergleichen im Radhaus (2) befestigt ist.

2. Radhausauskleidung nach Anspruch 1, dadurch gekennzeichnet, dass das Kunststoffaser-Vliesmaterial (7/6) an seiner Rückseite durch eine Kunststoffbeschichtung (8) wasserundurchlässig und klebefähig gemacht ist und vollflächig im Radhaus (2) befestigt ist.

3. Radhausauskleidung nach Anspruch 1, dadurch gekennzeichnet, dass zur bevorzugten Schalldämpfung das Kunststoffaser-Vliesmaterial (7'/6') an seiner Rückseite mit einer Kunststoffbeschichtung (8') wasserundurchlässig und klebefähig gemacht ist und vollflächig am Radhaus (2') befestigt ist und an seiner Vorderseite mit einer Beschichtung (9) aus elastischem Kunststoff wasserundurchlässig gemacht ist.

4. Radhausauskleidung nach Anspruch 1, dadurch gekennzeichnet, dass das Kunststoffaser-Vliesmaterial (7''/6'') zu beiden Seiten eines warmverformbaren Trägermaterials (10) aufgebracht ist und das Trägermaterial (10) die Radhausauskleidung (1) derart versteift, dass sie durch Klemmen, Schrauben und dergleichen am Radhaus (2'') auch im Abstand zum Radhaus (2'') aus Blech festlegbar ist.

## Claims

1. A wheel housing lining for motor vehicles, comprising a shell (1) of plastics material adapted approximately to the contour of the wheel housing (2) and secured thereto, characterized in that the plastics material forming the shell (1) is a needled plastics-fibre fleece material (7/6) which is adapted from sheet material by warm working to the contour of the shell housing (2) and is secured in the wheel housing (2) by adhesion (8), gripping, screwing or the like.

2. A wheel housing lining according to Claim 1, characterized in that the plastics-fibre fleece material (7/6) is made impermeable to water and adhesible on its rear side by a coating (8) of plastics material and is secured in the wheel housing (2) over its entire area.

3. A wheel housing lining according to Claim 1, characterized in that for preferred sound insulation the plastics-fibre fleece material (7'/6') is made impermeable to water and adhesible on its rear side by a coating (8') of plastics material and is secured in the wheel housing (2') over its entire area and is made impermeable to water on its front side by a coating (9) of elastic plastics material.

4. A wheel housing lining according to Claim 1, characterized in that the plastics-fibre fleece material (7''/6'') is applied to both sides of a warm-workable base material (10), and the base material (10) reinforces the wheel housing lining (1) in such a way that it can be secured by gripping, screwing and the like to the wheel housing (2'') of sheet metal even at a distance from the said wheel housing (2'').

## Revendications

1. Revêtement d'aile pour véhicules automobiles constitué d'une coque (1) en matière plastique à peu près adaptée au contour de l'aile (2) et fixée sur celle-ci, caractérisé en ce que la matière plastique formant la coque (1) est un feutre aiguilleté de fibres synthétiques (7/6) qui est adapté au contour de la roue (2) par des bandes déformées à chaud, et fixé par collage (8), agrafage, vissage ou moyen similaire, dans l'aile (2).

2. Revêtement d'aile selon la revendication 1, caractérisé en ce que le feutre de fibres synthétiques (7/6) est rendu imperméable à l'eau et adhésif sur l'envers par une couche de matière plastique (8), et fixé sur toute sa surface dans l'aile (2).

3. Revêtement d'aile selon la revendication 1, caractérisé en ce que pour l'isolation phonique préférée, le feutre de fibres synthétiques (7'/6') est rendu imperméable à l'eau et adhésif sur l'envers par une couche de matière plastique (8') et fixé sur toute sa surface sur l'aile (2'), et rendu imperméable à l'eau sur sa face avant par une couche (9) de matière plastique élastique.

4. Revêtement d'aile selon la revendication 1, caractérisé en ce que le feutre de fibres synthétiques (7''/6'') est appliqué sur les deux faces d'un matériau de support (10) déformable à chaud et en ce que le matériau de support (10) renforce le revêtement d'aile (1) suffisamment pour que celui-ci puisse être fixé par agrafage, vissage et moyen similaire sur l'aile (2'') en tôle, même à une certaine distance de celle-ci.

4

FIG.1

FIG.2

FIG.3

FIG.4